# EUROPEAN PATENT APPLICATION

(11) **EP 4 194 396 A1**
(43) Date of publication of application: **14.06.2023**
(21) Application number: 21214111.3
(22) Date of filing: 13.12.2021
(51) Int. Cl.: C01B 32/21, C10C 3/00, H01M 4/583

(54) **IMPROVED CARBONACEOUS COATING FOR BATTERY ELECTRODE MATERIALS**

(71) Applicant: Rain Carbon bvba, 9060 Zelzate (BE); Rain Carbon Germany GmbH, 44579 Castrop-Rauxel (DE)
(72) Inventor: Spahr, Michael, 6500 Bellinzona (CH); Kuhnt, Christopher, 58452 Witten (DE); Claes, Joris, 9130 Verrebroek (BE); Denoo, Bram, 8310 Assebroek (BE); Stiegert, Jens, 44149 Dortmund (DE)
(74) Representative: BiiP cvba

(57) **Abstract**

The present invention is directed to use of a petroleum-derived pitch product as coating material for graphite particles for the manufacturing of battery electrodes, characterized in that said pitch product has a melt viscosity index log₁₀ (visc)*100/SPM between 1.2 and 3.0 at 220°C and between 1.0 and 2.5 at 240°C, wherein visc = melt viscosity (mPa.s) and SPM= softening point °C Mettler.

Further, the present invention is directed to a battery electrode comprising a coating made of said pitch product, as well as directed to a battery comprising an electrode having a coating made of said pitch product.

In addition, the present invention is directed to a process for obtaining a petroleum-derived pitch product as mentioned above, said process comprising a petroleum vacuum distillation process step for obtaining petroleum-derived distillation residue. Further, the invention is directed to a process for manufacturing a battery electrode comprising said process for producing a pitch product.

## Description

### TECHNICAL FIELD

The present invention generally relates to the use of a petroleum-derived pitch product as coating material for particle coatings. The coating material is used to coat the particles of electrode materials like graphite, silicon, silicon oxide, or carbonaceous composites thereof with a carbon surface layer. These carbon-coated electrode materials can be used in the manufacturing of battery electrodes, more specifically Li-Ion batteries.

In addition, the present invention relates to a battery electrode comprising electrode material with a particle coating made of such pitch.

### BACKGROUND

Commercially supplied negative electrode materials used in lithium-ion batteries are conventionally based on graphite but also more and more on silicon oxide, metal silicon, silicon alloy, and composites of carbon or graphite with materials based on silicon, tin, and others.

Many of these negative electrode materials are coated with carbon coating using coal tar- and petroleum-based pitches as precursors. A number of processes are known to obtain a suitable coating. Typically, applying coating to the electrode material particle surface is done either in a wet process by dissolving the pitch in an organic solvent or dispersing the milled fine pitch powder in water, mixing the solution or suspension with the particles and drying the mixture before heat-treating it in an inert gas atmosphere at elevated temperatures of 600 °C-1300 °C. Also, dry-coating processes are used in which the finely milled pitch is mixed with the electrode material particles. The mixture then is heated in an inert gas atmosphere to melt the pitch and form the superficial carbon layer that is finally carbonized at elevated temperatures and, if required, graphitized.

A first problem known in the art is that conventional carbon coating is not always homogeneously distributed over the electrode particle surfaces, such that a relatively high amount, i.e. a relatively thick film of carbon is required to completely cover the particle surface needed to reduce the BET surface area, the electrochemically active surface area wetted by the battery electrolyte and the reactivity of the electrode material towards the electrolyte. Low surface area carbon coatings improve electrochemical parameters of the carbon particles by decreasing charge losses, improving cell safety and charge/discharge cycling stability. However, as the carbon formed at the particle surface contributes less to the reversible capacity of the electrode material compared to the particle core, and as the thickness of the carbon layer also influences the insertion rate of lithium ions into the bulk, thinner coatings are preferred.

A second problem is that typical pitches derived from coal tar and petrochemical sources contain small particles of carbon but also metal impurities that are detrimental to the quality of the coating layer formed. These particle impurities are usually measured as quinoline insoluble matter (QI content) that is an indicator for the pitch quality. To obtain a good carbon film quality, the QI content should be low. In addition, some metal particle impurities like iron, copper, and zinc give rise to safety issues in the lithium-ion cell. Insoluble constituents reflected by the QI and TI value are disadvantageous in particular for the wet coating process in which the pitch is dissolved in organic solvent like THF, toluene, xylene or hexanes prior to mixed into the substrate to be coated. Specific requirements for QI and TI for the coating materials relate to wet coating process.

A third problem is that typical surface-coating processes based on coating from coal tar pitch on electrode particles in a dry- or wet-mixing process and a subsequent carbonization at elevated temperatures in an inert gas atmosphere result in hydrophobic particle surfaces. This hydrophobicity leads to a further problem in connection with the use of binders in water-based electrode manufacturing processes. In order to solve this problem, EP3177651 (A1) proposes a coating of non-graphitic carbon and subsequent oxidation.

Another issue especially of coal tar pitch is that it contains some polyaromatic hydrocarbons (PAH) being carcinogenic and hazardous to health and environment, like benzo[a] pyrene, B[a]P.

In addition, with the changes in steel production moving away from blast furnaces to reduce the emission of greenhouse gases, the availability of coal tar as raw material for coal tar pitch will significantly reduce in the future and as a consequence also the availability of high-quality coal tar.

Given the above, it is an objective of the present invention to use a pitch product as coating material for graphite particles for the manufacturing of battery electrodes that has the appropriate characteristics for resulting in a thin coating layer being typically a few tens of nanometers thick.

Without referring to any theory, thin homogeneous coatings are expected with coating materials showing good wetting and impregnation properties of the particle surface. This can be adjusted by the composition and suitable viscosities in the molten state of the pitches.

Another objective of the present invention is to use a pitch product as coating material that enhances the quality of the carbon coating layer formed at the surface of graphite particles for the manufacturing of battery electrodes.

Another objective is to provide a pitch-based carbon coating being suitable in water-based electrode manufacturing processes.

A further objective is to decrease safety issues and specific charge losses in the lithium-ion cell as well as to increase the charge/discharge cycling stability.

Furthermore, it is a general objective of the present invention to provide an alternative for coal tar pitch-based coating that allows an increased security of supply and meets the necessary requirements for use as hydrocarbon coating material in the manufacturing of battery electrodes, in particular Li-ion batteries.

Another general objective of the present invention is to provide an alternative pitch-based coating resulting in similar coke values and softening points, and similar processing and performance of battery electrodes, in particular Li-ion batteries.

A further general objective of the present invention is to provide an alternative for coal tar pitch-based coating that is more environmentally friendly.

### SUMMARY

In a first aspect, the present invention provides the use of a petroleum-derived pitch product as coating material for graphite particles for the manufacturing of battery electrodes, characterized in that said pitch product has a melt viscosity index log₁₀(visc)*100/SPM between 1.2 and 3.0 at 220°C and between 1.0 and 2.5 at 240°C, wherein visc = melt viscosity (mPa.s) and SPM= softening point Mettler in °C.

In a second aspect in accordance with the present invention, a battery electrode is provided comprising a coating made of said pitch product.

In a third aspect in accordance with the present invention, a battery is provided comprising an electrode having a coating made of said pitch product.

In a fourth aspect in accordance with the present invention, a process for obtaining a petroleum-derived pitch product for the use as mentioned in the first aspect is provided, said process comprising a petroleum vacuum distillation process step for obtaining petroleum-derived distillation residue.

In a fifth aspect in accordance with the present invention, a process for manufacturing a battery electrode is provided comprising said process for producing a pitch product.

### DETAILED DESCRIPTION

In a first aspect, the present invention provides the use of a petroleum-derived pitch product as coating material for graphite particles for the manufacturing of battery electrodes, characterized in that said pitch product has a melt viscosity index log₁₀ (visc)*100/SPM between 1.2 and 3.0 at 220°C and between 1.0 and 2.5 at 240°C, wherein visc = melt viscosity (mPa.s) and SPM= softening point °C Mettler.

More preferably, said pitch product has a melt viscosity index log₁₀ (visc)*100/SPM between 1.8 and 2.5 at 220°C and between 1.5 and 2.1 at 240°C, wherein visc = melt viscosity (mPa.s) and SPM= softening point °C Mettler.

Even more preferably, said pitch product has a melt viscosity index log₁₀ (visc)*100/SPM between 2.0 and 2.5 at 220°C and between 1.7 and 2.1 at 240°C, wherein visc = melt viscosity (mPa.s) and SPM= softening point °C Mettler.

The use of such pitch product as carbon precursor product forms, at low precursor amount, a thin and homogeneous coating layer of carbon at the surface of electrode material particles used in battery electrodes, in particular in the negative electrode of lithium-ion batteries.

In an embodiment of the present invention, the pitch product as used has a melt viscosity between 100 and 500, preferably between 150 and 400 mPa.s at 220°C, and between 50 and 200, preferably 75 and 150 mPa.s at 240°C while having a SPM between 110 and 130°C.

In another embodiment of the present invention, the pitch product as used has a melt viscosity between 500 and 5000, preferably between 1000 and 3000 mPa.s at 220°C, and between 100 and 1000, preferably between 400 and 900 mPa.s at 240°C while having a SPM between 140 and 160°C.

In still another embodiment of the present invention, the pitch product as used has a melt viscosity between 5000 and 50000, preferably between 10000 and 35000 mPa.s at 220°C, and between 500 and 10000, preferably between 2000 and 7000 mPa.s at 240°C, while having a SPM between 170 and 190°C.

The adjusted melt viscosity enhances wetting and impregnation of the particle surface, such that a thin film of carbon being homogeneously distributed at the particle surface is achieved. Enhanced surface wetting and impregnation results in good coverage of the geometrical particle surface but also of the micro- and mesopores as well as the roughness that typically can be found at the particle surface.

The use as described throughout this text is provided as an alternative to the use of coal tar pitch-based coating for battery electrodes, meeting the requirements of the battery manufacturing industry and having the advantages of ample availability.

In an embodiment of the present invention, a petroleum-derived pitch product may be used comprising a concentration of at least 70 % asphaltenes or at least 75 % or at least 80 % as measured by the SARA method (Clay-Gel Absorption Chromatographic Method according to ASTM D2007), resulting in respectively increasing coke values. The pitch product ensures a dense (low porosity) homogeneous carbon coating of the electrode material surface lowering the surface reactivity towards the electrolyte as well the surface area of the electrode material being in direct contact with the battery electrolyte and in addition a good electrical conductivity and particle contact of the electrode material in the battery cell electrode.

In an embodiment in accordance with the present invention, the pitch product may have a resin content below 20% (SARA), which may contribute to its high coke yield.

In another embodiment in accordance with the present invention, the pitch product may have a B(a)P content of less than less than 5000 ppm, or even less than 3000 ppm, or even less than 2000 ppm, and/or a 16 EPA-PAH Sum (Polycyclic Aromatic Hydrocarbons according to US Environmental Protection Agency (EPA)) of less than 7 % by weight, or even less than 5%. A sufficiently low B(a)P content and/or 16 EPA-PAH Sum results obviously in an improved environmental friendliness compared to pure coal tar derived pitch products.

In a further embodiment, the pitch product may have a coke yield of at least 35% Alcan, or at least 45 % Alcan, or at least 50 % Alcan, or at least 55 % Alcan at softening points between 110-185 °C Mettler. As the pitch product is converted into carbon during the carbonization process, a sufficiently high coke yield allows avoiding a high porosity in the resulting graphite particles due to fewer volatiles formed during the carbonization process. A subsequent treatment in air at temperatures of 400-1000 °C in a fluidized bed or rotary kiln may be used to increase the hydrophilicity of the carbon surface and by that to improve the processing of the carbon-coated electrode material in water-based electrode manufacturing processes. A dense carbon layer may be formed with a morphology that is advantageous for the formation of an efficient solid electrolyte interphase at the electrode particle surface. In addition, the nature and quality of the carbon film formed at the particle surface influences the charge losses as well, besides the electrochemically active electrode surface area being in direct contact with the electrolyte of the battery cell.

In a further embodiment, the pitch product may have a flashpoint of at least 200 °C, preferably at least 220 °C, allowing to process the pitch product according to safety requirements as may be required in hot mixing processes.

In an embodiment of the present invention, the pitch product may have a softening point between 110 and 190 °C Mettler, being the target range in manufacturing of battery electrodes.

In accordance with the present invention, the use of the pitch product as described throughout this text may be provided, wherein the pitch product having a quinoline insoluble content range of less than 1 % weight and/or toluene insoluble content of less than 20 % weight. Preferably, the pitch product may have a quinoline insoluble content range of less than 1 % weight and a toluene insoluble content of less than 5% weight, which may enhance its applicability as coating material for graphite particles in a solvent-based coating process, as a lower toluene insoluble content improves solvability.

In a preferred embodiment in accordance with the present invention, the use of the pitch product as described throughout this text may be provided, wherein the pitch product has a melt viscosity between 500 and 50000 mPa.s at 220°C, a coke yield between 35 % and 70 % Alcan, and a quinoline insoluble content range of less than 1% weight.

In a particular embodiment, the pitch product as used in the present invention consists of solely petroleum-derived components.

In a particular embodiment, the pitch product as used in the present invention consists of petroleum-derived distillation residue.

In another particular embodiment, the pitch product as used in the present invention does not comprise any coal tar-derived component.

In a second aspect in accordance with the present invention, a battery electrode is provided comprising a coating made of said pitch product. Such coating may result in a BET surface area reduction of at least 40 % at a pitch amount of 5 wt.% for spherical natural graphite with a BET SSA of 6 m²/g and an average particle size of 15 micron used as electrode material in the electrode. The coulombic efficiency of the coated natural graphite (BET 3 m²/g) may increase above 90 %.

In third aspect in accordance with the present invention, in accordance with the present invention, a battery is provided comprising an electrode having a coating made of said pitch product. In particular, lithium-ion cell performance may be influenced positively, i.e. low specific charge losses and high coulombic efficiency, good energy and power density and specific energy and powder, and cycling stability of the cell.

In a fourth aspect in accordance with the present invention, a process for obtaining a petroleum-derived pitch product for the use as mentioned in the first aspect is provided, said process comprising a petroleum vacuum distillation process step for obtaining petroleum-derived distillation residue.

A benefit of a process in accordance with the present invention is that it may allow keeping the amount of asphaltenes measured by SARA at a similar level compared to the known coal tar-based battery electrode coating precursors. In addition, other pitch properties may not be degraded compared to known coal tar coating precursors.

An additional benefit is that such process may result in that the coke value of the pitch product can be kept at a high level, e.g. at least 40 % ALCAN at the target softening point, e.g. 110-190°C Mettler.

In contrast to producing a pitch product with a process in accordance with the present invention, conventional coal tar pitch coating precursors are produced by distillation at ambient pressure and higher temperatures, in some cases followed by air blowing, Drawbacks of these products resulting from ambient pressure distillation are a high mesophase and toluene insoluble content due to the high processing temperatures leading to cracking and mesophase formation. Other drawbacks are the low coke yields, high volatile content, and high viscosities that deteriorate the impregnation and binder properties and processing of the pitch as well as low flash points giving rise to safety issues in the electrode fabrication processes.

Additional drawbacks of distillation at ambient pressure are that, as the distillation of petroleum tars is reactive, the temperatures being necessary for distillation at atmospheric pressure already initiate the conversion to solid carbon components in the heating chamber and columns, potentially leading to an excessive fouling rate during pitch production resulting in reliability issues of the plant.

In an embodiment of the present invention, the distillation process steps are performed at vacuum levels between 0.1 and 400 mbar, preferably 0.1 and 250 mbar, and at temperatures between 200 and 400°C, preferably between 280 and 370 °C.

A process in accordance with the present invention allows a strict control and prevention of potential mesophase formation for low secondary quinoline insoluble amounts in the pitch causing thin homogeneous coatings at the particle surface.

In addition, a process in accordance with the present invention gives a high level of reliability by reaching the required softening point and viscosity of the pitch product at lower temperatures compared to conventional ambient pressure distillation and hence leads to better plant reliability. The lower distillation temperatures used in the vacuum distillation process avoid degradation reactions like mesophase and coke formation, leading to fouling of the plant and regular shutdowns.

Further, the process of the present invention may result in a pitch product with high quality and reliability showing sufficiently high coking value and low 16 EPA PAH content at low viscosity for use in battery electrodes. 16 EPA PAH level of the resulting binder is lower than of the pure coal tar-derived products giving rise to more environmentally friendly materials.

### EXAMPLE 1-6:

Below Table 1 shows examples of petroleum-derived pitch products and properties for use in accordance with an embodiment of the present invention.

**Table 1**

| Pitch Product Parameter | Example 1 | Example 2 | Example 3 | Example 4 | Example 5 | Example 6 |
|---|---|---|---|---|---|---|
| SP, Mettler in °C | 120 | 149.3 | 152.2 | 180.2 | 185 | 152.3 |
| TI in wt.% | 8 | 0.7 | 13.9 | 18.8 | 1.3 | 15.5 |
| QI in wt.% | <1 | <0.1 | <0.1 | 0.5 | <0.1 | 0.2 |
| Beta-resin in wt. % | <8 | 0.7 | 13.9 | 18.3 | 1.3 | 15.3 |
| Coke value, ALCAN in wt.% | 42 | 40.9 | 44.6 | 58.8 | 45.7 | 47.9 |
| Ash in wt.% | <0.02 | <0.02 | <0.02 | <0.02 | <0.02 | <0.02 |
| B[a]P Content in ppm | 1530 | 896 | 935 | 931 | 638 | 1232 |
| 16 EPA-PAH sum in wt.% | 4 | 1.63 | 2.25 | 0.99 | 0.65 | 1.59 |
| Asphaltenes (SARA) in wt % | 81.8 | 76 | 79.8 | 95.1 | 90.7 | n.a. |
| Resins (SARA) in wt.% | 11.4 | 19.3 | 15.8 | 3.7 | 6.4 | n.a. |
| Flash point (small scale) in °C | 220-230 | 240-250 | 230-240 | 280-290 | 285-295 | n.a. |
| Melt viscosity (visc) in mPa s | | | | | | |
| -220 °C | 279 | 1546 | 2850 | 10500 | 32580 | 1977 |
| -240 °C | 126 | 503 | 835 | 2590 | 6317 | 599 |
| Melt viscosity index | | | | | | |
| -220 °C | 2.04 | 2.14 | 2.27 | 2.23 | 2.44 | 2.16 |
| -240 °C | 1.75 | 1.81 | 1.92 | 1.89 | 2.05 | 1.82 |

Table 2 further illustrates the performance of coated natural graphite materials obtained by coating with the pitch products of examples 3 and 4 and subsequent carbonization at 1100 °C:

**Table 2:**

| Properties carbon-coated natural graphite | Example 3 | Example 4 | |
|---|---|---|---|
| BET SSA in m² g⁻¹ | | | |
| | | | |
| at carbon amount | | | |
| 0% | 6.0 | 6.0 | |
| 5% | 3.0 | 2.5 | |
| 7% | 2.6 | 2.0 | |
| 8% | 2.3 | | |
| Coulombic efficiency 1^{st} charge/discharge in % | | | |
| | | | |
| at carbon amount | | | |
| 5% | 90.5 | | |
| 7% | 94.5 | | |

Below table provides an overview of analytical procedures of the product parameters as used in this text:

| **Analysis** | **Unit** | **Norm/Method** |
|---|---|---|
| Softening point, Mettler (SPM) | °C | ASTM D3104 |
| Quinoline insoluble matter, QI | % (by weight) | DIN 51921 |
| Toluene insoluble matter, TI | % (by weight) | DIN 51906 |
| Beta-resins | % (by weight) | Calculation TI-QI |
| Coke yield (value), Alcan | % (by weight) | ASTM D4715 |
| Ash (900 °C) | % (by weight) | ASTM D2415 |
| Benzo[a]pyrene content | ppm | ISO 18287 |
| 16 EPA-PAH sum | % (by weight) | ISO 18287 |
| Flash point (small scale equilibrium) | °C | ISO 3679 |
| Dynamic melt viscosity measured at temperatures of 160 °C, 180 °C, 200 °C, 220 °C, 240 °C, 260 °C, 280 °C | mPa · s | ASTM D5018 |
| SARA (final product) | | ASTM D2007 |
| -asphaltenes | % (by weight) | |
| -resins | % (by weight) | |
| BET Specific Surface Area (BET SSA) | m² g⁻¹ | ISO 9277, ASTM C1069 |

### EXAMPLE 7:

- Preparation of coated natural graphite samples:
   Spherical natural graphite was mixed in an intensive mixer at room temperature for 5 min with pitch powder obtained from petroleum-derived pitch product as described throughout this text and ground to an average particle size of ca. 3-5 µm. The mixture was heat-treated in a nitrogen atmosphere at 1100 °C for 5 h, with a heat up rate of 100°C/h.
- Electrochemical tests of the carbon-coated natural graphite materials:
   The graphite samples were dispersed in a solution of carboxymethyl cellulose (CMC) in water and then the SBR latex binder material was added to achieve a final composition of 96 wt.% graphite, 2 wt.% CMC, and 2 wt.% SBR. The aqueous slurry was deposited on a copper foil by a doctor blade method and the resulting coated foil was dried at 120 °C. The dried sheet was roll-pressed and the final electrodes of 17 mm in diameter then were punched out of the sheet. The electrodes having a mass loading of ca. 8.5 mg/cm², a density of ca. 1.65 g/cm³ and a thickness of ca. 70 µm were vacuum dried at 100 °C and tested in lithium coin-half cells using a 1 M LiPF₆ EC/DEC (1:1 by weight) electrolyte and a porous polypropylene separator. The first cycle coulombic efficiency and reversible specific charge of the electrode were measured by discharging the half-cell at 0.1 C to 5 mV versus Li/Li+ and keeping the cell at this potential until the current decreased to 0.7 mA, then the cell was charged to 1.5 V vs. Li/Li+ and kept at this potential until the cell current dropped to 0.7 mA. The coulombic efficiency of the first charge/discharge cycle was calculated from the reversible specific charge/(reversible specific charge + irreversible specific charge) = measured mAh (1^{st} cycle charge)/measured mAh (1^{st} cycle discharge) in percent.

## Claims

1. Use of a petroleum-derived pitch product as coating material for graphite particles for the manufacturing of battery electrodes, **characterized in that** said pitch product has a melt viscosity index log₁₀(visc)*100/SPM between 1.2 and 3.0 at 220°C and between 1.0 and 2.5 at 240°C, wherein visc = melt viscosity (in mPa.s) and SPM = softening point, Mettler (in °C).

2. The use according to claim 1, wherein the pitch product has a melt viscosity between 100 and 500 mPa.s at 220°C and between 50 and 200 mPa.s at 240°C while having a SPM between 110 and 130°C.

3. The use according to claim 1, wherein the pitch product has a melt viscosity between 500 and 5000 mPa.s at 220°C and between 100 and 1000 mPa.s at 240°C while having a SPM between 140 and 160°C.

4. The use according to claim 1, wherein the pitch product has a melt viscosity between 5000 and 50000 mPa.s at 220°C and between 500 and 10000 at 240°C, while having a SPM between 170 and 190°C.

5. The use according to claim 1, wherein the pitch product has a coke yield of at least 35 % Alcan.

6. The use according to claim 1, wherein the pitch product having a quinoline insoluble content range of less than 1 % weight and/or toluene insoluble content of less than 20 % weight.

7. The use according to claim 1, wherein the pitch product has a coke yield between 35 % and 70 % Alcan, and a quinoline insoluble content range of less than 1 % weight.

8. The use according to any of the above claims in a solvent-based coating process, wherein the pitch having a quinoline insoluble content range of less than 1 % weight and a toluene insoluble content of less than 5 % weight.

9. The use according to any of the above claims, wherein the pitch product having a resin content below 20 % (SARA).

10. The use according to any of the above claims, wherein the pitch product having a B(a)P content of less than 5000 ppm and/or a 16 EPA-PAH Sum of less than 7 % by weight.

11. The use according to any of the above claims, wherein the pitch product consisting of petroleum-derived distillation residue.

12. The use according to any of the above claims wherein the pitch product is used for coating and/or binding electrode material particles for negative electrodes of lithium-ion batteries.

13. A battery electrode comprising electrode material with a particle coating made of the pitch product as used in any of the foregoing claims.

14. A lithium-ion battery comprising an electrode according to claim 13.

15. A process for obtaining a petroleum-derived pitch product for the use according to claims 1 to 12, said process comprising a petroleum vacuum distillation process step for obtaining petroleum-derived distillation residue.

16. The process of claims 15, wherein the distillation process steps are performed at vacuum levels between 0.1 and 250 mbar and temperatures between 200 and 370 °C.

17. A process for manufacturing a battery electrode comprising the process of claim 15 to 16.
